# EUROPÄISCHE PATENTSCHRIFT

(11) **EP 1 500 537 B1**
(45) Veröffentlichungstag und Bekanntmachung des Hinweises auf die Patenterteilung: **30.08.2006**
(21) Anmeldenummer: 04017294.2
(22) Anmeldetag: 22.07.2004
(51) Int. Cl.: B60J 1/10

(54) **Verglasung für Kraftfahrzeuge**
Glass pane for vehicles
Vitre en verre pour véhicules

(30) Priorität: 24.07.2003 DE 10333605
(43) Veröffentlichungstag der Anmeldung: 26.01.2005
(73) Patentinhaber: DaimlerChrysler AG, 70567 Stuttgart (DE)
(72) Erfinder: Beck, Helmut, 89077 Ulm (DE); Krieglsteiner, Franz, 89171 Illerkirchberg (DE); Leupolz, Andreas, 88263 Horgenzell (DE)

(56) Entgegenhaltungen:
- EP-A- 0 679 793
- EP-A- 1 106 407
- DE-A- 19 830 114
- DE-C- 4 238 490
- DE-C- 10 119 315
- US-A1- 2001 030 449

## Beschreibung

Die Erfindung betrifft eine Verglasung gemäß dem Oberbegriff des Patentanspruches 1. Solche Verglasungen, die über eine Klebeverbindung mit einer Karosserie eines Kraftfahrzeuges verbunden sind, sind allgemein bekannt und weisen meist eine äußere und eine innere Scheibe auf.

In der Praxis muss bei großen Fahrgastzellen, insbesondere bei Omnibussen, ein Notausstieg vorhanden sein, durch den das Kfz bei einem Unfall sicher zu verlassen ist.

So zeigt die DE 101 19 315 C1 eine Verglasung mit mehreren Glasscheiben und einer Schlagbolzenvorrichtung, mit Hilfe derer die Verglasung im Notfall zerstört wird, so dass ein Notausstieg entsteht. Die Schlagbolzenvorrichtung ist in einem Scheibenzwischenraum angeordnet. Bei Auslösung beschädigt sie die den Scheibenzwischenraum begrenzenden Scheiben und gibt so durch Zerstörung der Verglasung den Notausstieg frei. Diese Lösung besteht aus einer Vielzahl von Scheiben und ist konstruktiv aufwendig.

Zum weiteren technischen Hintergrund wird noch auf die DE 198 30 114 A1 verwiesen. Sie zeigt ein Fenster mit einer einzelnen Scheibe aus Einscheibensicherheitsglas mit aufgeklebter Folie, die als Splitterschutz dient und bis unter ein Klemmprofil reicht. Diese Scheibe ist über einen Klemmprofilrahmen mit der Karosserie verbunden. Im Notfall wird die Scheibe zerstört und die Bruchstücke werden durch die von dem Klemmprofil gehaltene Folie in der Karosserie gehalten. Zum Ausstieg muss ein Widerstand der Folie durch Herausdrücken überwunden werden. Eine weitere, gattungsgemäße Verglasung ist aus der EP 0 679 793 A2 bekannt.

Der Erfindung liegt die Aufgabe zugrunde eine konstruktiv einfach aufgebaute und kostengünstig herstellbare Verglasung, insbesondere eine Isolierverglasung, mit Notöffnungsfunktion zu Verfügung zu stellen, die im Notfall einfach bedienbar ist, einen sicheren und barrierefreien Notausstieg ermöglicht und vorzugsweise gute Isoliereigenschaften bzgl. Schall und Wärme aufweist.

Erfindungsgemäß wird diese Aufgabe durch eine Verglasung mit den Merkmalen des Anspruchs 1 gelöst.

Die Verglasung, vorzugsweise die Isolierverglasung, weist eine äußere Scheibe auf, die in ihrem Randbereich mit der Karosserie eines Kraftfahrzeugs verklebt ist. Die äußere Scheibe ist zudem mit einer inneren Scheibe verbunden. Die innere Scheibe weist eine Aussparung im Eckbereich, auf und umfasst diesen. Hierdurch ist die äußere Scheibe vom Innenraum des Kfz direkt zugänglich. In einem Notfall kann somit die äußere Scheibe beschädigt werden, ohne dass zuerst die innere Scheibe beschädigt oder entfernt werden muss. Das hat den Vorteil, dass die Verglasung kostengünstig herstellbar ist und im Notfall schnell und einfach ein Notausstieg ermöglicht wird und somit möglichst wenig Zeit verloren geht. Weiterhin ist die innere Scheibe kleiner, als die äußere Scheibe und vorzugsweise nicht direkt mit der Karosserie, sondern nur mit der äußeren Scheibe verbunden. Diese hält die Verglasung in der Karosserie. Durch einen Schlag auf die äußere Scheibe wird diese zerstört und es besteht keine Verbindung mehr zwischen der Verglasung und der Karosserie. Die Verglasung fällt nun aus dem Notausstieg heraus bzw. kann einfach entfernt werden. Dadurch ist der Fluchtweg schnell, d.h. mit einem Arbeitsgang, ohne Beschädigung zusätzlicher Scheiben oder Folien verfügbar. Der Fluchtweg ist somit barrierefrei und sicher begehbar. Durch den Aufbau der Verglasung mit mehreren, untereinander verbundenen Scheiben wird eine gute Isolierwirkung gegen Schall und Wärme erzielt.

Erfindungsgemäß ist vorgesehen die äußere Scheibe aus einem Einscheibensicherheitsglas (ESG) herzustellen. Das Einscheibensicherheitsglas (ESG) ist ein Glas, das bei der Herstellung, vorzugsweise thermisch, vorgespannt wird, indem in die beiden Oberflächen eine Druckspannung eingeprägt wird, die durch eine Zugspannung im Inneren des Glases kompensiert wird. Durch diese Vorspannung erfolgt bei einem Schlag mit einem spitzen Gegenstand, wie beispielsweise einem Nothammer, ein sogenannter Krümelbruch, wobei die Scheibe in eine Vielzahl kleiner Bruchstücke zerfällt. Dies hat den Vorteil, dass keine großen und gefährlichen Scherben, sondern nur feinkrümelige und stumpfe Bruchstücke entstehen. Mit nur einem Schlag wird die äußere Scheibe vollständig zerstört und der Notausstieg sicher freigegeben.

Erfindungsgemäß ist vorgesehen, dass auf die äußere Scheibe eine Folie als Splitterschutz aufgeklebt ist. Durch die Verklebung mit der Folie, werden die Bruchstücke zusammengehalten, um Verletzungen durch Herunterfallen der Bruchstücke zu vermeiden. Die Fläche der Folie ist kleiner, als die Fläche der äußeren Scheibe, jedoch mindestens so groß wie die Fläche der inneren Scheibe. Weiterhin weist die Folie eine Aussparung im Eckbereich auf und umfasst diesen. Durch die Aussparung kann das Einscheibensicherheitsglas (ESG) ohne eine Behinderung durch die Folie aus dem Innenraum des Kfz angeschlagen werden.

Weiterhin ist erfindungsgemäß vorgesehen, dass die Folie als Lichtlenkungsmittel und/oder Sonnenschutz ausgeführt ist. Hierdurch kann beispielsweise eine Entblendung oder eine schaltbare Verglasung erfolgen. Lichtlenkungs- und Sonnenschutzfunktionen werden beispielsweise durch Folien mit dielektrischen Materialien, mit Mikroprismen, mit thermotroper oder gaschromer optischer Schaltung ermöglicht. Die Folien werden beispielsweise durch Anlegen einer elektrischen Spannung an die Folie geschaltet.

In einer bevorzugten Ausführungsform ist die Folie als Wärme-, Akustik- und/oder Einbruchsschutz ausgebildet.

In einer weiteren Ausführungsform sind die äußere und die innere Scheibe über Abstandshalter voneinander beabstandet. Ein hierdurch entstehender Scheibenzwischenraum isoliert den Fahrzeuginnenraum gegen Schall und erschwert den Austausch thermischer Energie zwischen Fahrzeuginnenraum und Umwelt. Der Zwischenraum kann zur Verbesserung der Isolation beispielsweise mit einem Gas gefüllt sein.

Eine weitere Möglichkeit der Gestaltung der Verglasung ist eine vollflächige Verbindung zwischen der inneren und der äußeren Scheibe. Hierdurch entsteht ein Verbundscheibensicherheitsglas mit erheblich reduzierter Splittergefahr. Weiterhin wird durch den Schichtaufbau eine gesteigerte Isolierwirkung gegenüber einer Einfachverglasung erreicht.

In einer weiteren Ausführung der Erfindung ist im Bereich der Aussparung eine Schlagbolzenvorrichtung vorgesehen, um im Notfall die äußere Scheibe zu zerstören. Die Schlagbolzenvorrichtung kann pyrotechnisch, pneumatisch oder mechanisch ausgeführt sein. Bei Auslösung, die ferngesteuert oder vor Ort erfolgen kann, der Schlagbolzenvorrichtung wird die äußere Scheibe der Verglasung angeschlagen und splittert. Mit Hilfe der Schlagbolzenvorrichtung kann im Notfall auch eine automatische oder fernbetätigte Zerstörung der Scheibe erfolgen, um so einen Notausstieg zu ermöglichen. Es können auch mehrere Aussparungen vorgesehen sein, z.B. eine Aussparung, an der mit Hilfe der Schlagbolzenvorrichtung die Zerstörung erfolgen kann und eine weitere für die Zerstörung mit einem Notfallhammer oder einem anderen spitzen Gegenstand.

Es ist von Vorteil, wenn ein Bereich der äußeren Scheibe, insbesondere der Randbereich, blickdicht ausgeführt, insbesondere bedruckt, ist. Hierdurch wird verhindert, dass die Aussparung, die Schlagbolzenvorrichtung und/oder die Verklebung mit der Karosserie von außen einsehbar sind und dadurch das optische Erscheinungsbild stören. Weiterhin wird dadurch verhindert, dass in dem Bereich, in dem die Folie ausgespart ist, Licht von außen ungehindert nach innen gelangt und ebenfalls das optische Erscheinungsbild stört.

In einer weiteren Ausführungsform ist eine Öffnung in der Karosserie des Kfz durch eine vorschlagsgemäße Verglasung verschlossen. Die äußere Scheibe kann hierbei mit der Karosserie flächenbündig verklebt sein. Im Notfall kann die Öffnung nach Zerstörung der Verglasung als Notausstieg genutzt werden. Hierdurch erhält man einen Notausstieg in der Karosserie, der nicht über die Abmessungen der Karosserie hinausragt. Die Verglasung kann hierbei blickdicht ausgestaltet oder durch einen Teil der Innenverkleidung, beispielsweise einen Vorhang, abgedeckt sein.

Eine vorteilhafte Ausführung sieht vor, dass im Innenraum der Fahrgastzelle des Kfz ein Stützelement angeordnet ist, das zum Auffangen der inneren Scheibe ausgebildet ist. Bei Einbau der vorschlagsgemäßen Verglasung im Überkopfbereich besteht die Gefahr, dass die Verglasung bei Zerstörung der äußeren Scheibe auf Kfz-Insassen herabfällt und diese verletzt. Diese Gefahr besteht auch bei dem Einbau im Seitenbereich, falls das Kfz bei einem Unfall umkippt. Durch das Stützelement wird ein Herabfallen der Verglasung verhindert.

Besonders bevorzugt ist eine Innenverkleidung der Karosserie als Stützelement ausgebildet, wodurch eine optisch ansprechende Ausgestaltung erreicht wird, ohne dass zusätzliche Bauteile notwendig sind. Ebenso ist vorgesehen das Stützelement als Tuch oder als Winkel auszubilden.

In den Figuren und der dazugehörigen Beschreibung sind weitere Ausführungen der Erfindung dargestellt und erläutert, dabei zeigen
- Fig. 1: eine Verglasung mit zwei Scheiben und einer Aussparung,
- Fig. 2: die Verglasung in einer Schnittdarstellung und einen Nothammer,
- Fig. 3: die Verglasung in einer Schnittdarstellung mit zerstörter Außenscheibe und
- Fig. 4: zeigt eine Schnittdarstellung einer Verglasung mit beabstandeten Scheiben.

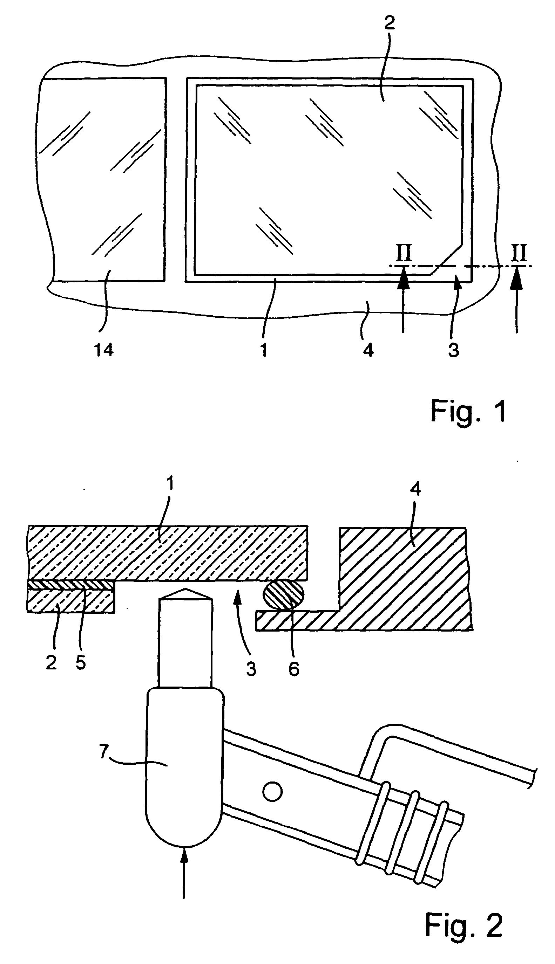

Figur 1 zeigt eine Verglasung mit zwei Scheiben 1, 2 und einer Aussparung 3 in einer Karosserie 4 eines Kraftfahrzeugs, insbesondere eines Omnibusses oder eines Zuges. Der dargestellte Karosserieabschnitt kann sich im Dach- oder Seitenbereich befinden. Die Blickrichtung ist hierbei vom Innenraum nach außen. Die Verglasung befindet sich neben einer Standardverglasung 14 ohne Notöffnungsfunktion. Die äußere Scheibe 1 besteht aus Einscheibensicherheitsglas (ESG). Die innere Scheibe 2 weist im Eckbereich eine Aussparung 3 auf und umfasst diesen und ist kleiner als die äußere Scheibe 1. Die äußere 1 und die innere Scheibe 2 sind miteinander verbunden.

Figur 2 zeigt die Verglasung aus Figur 1 in einer Schnittdarstellung entlang der Linie II-II. Unterhalb der inneren Scheibe 2 ist ein Nothammer 7 dargestellt. Die innere Scheibe 2 und die äußere Scheibe 1 sind über eine Folie 5 vollflächig miteinander verbunden, vorzugsweise verklebt. Die Abmessungen der äußeren Scheibe 1 sind größer, als die der inneren Scheibe 2 d.h. die Flächenausdehnung der inneren Scheibe 2 reicht nicht bis zum Rand der äußeren Scheibe 1. Die äußere Scheibe 1 ist in ihrem Randbereich über eine Klebeverbindung 6 flächenbündig mit der Karosserie 4 des Kraftfahrzeugs verbunden. Die Halterung der Verglasung erfolgt über die Verklebung der äußeren Scheibe 1. Hierdurch wird ein stabiler Halt der Verglasung erreicht. Die innere Scheibe 2 weist eine Aussparung 3 auf, durch die die äußere Scheibe 1 mit dem Nothammer 7 oder einem anderen spitzen Gegenstand anschlagbar ist. Der Nothammer 7 ist üblicherweise verplombt im Innenraum des Kraftfahrzeug in der Nähe der Verglasung befestigt. Bei Beschädigung der äußeren Scheibe 1 aus ESG mit dem Nothammer 7 zerbricht diese in eine Vielzahl kleiner und feinkrümeliger Bruchstücke. Im Bereich der Folie 5 werden die Bruchstücke durch die Folie 5 zusammengehalten. Hierdurch entstehen weniger Bruchstücke und die Verletzungsgefahr wird verringert. Im Randbereich erfolgt eine um die innere Scheibe 2 umlaufende, vollständige Zerstörung der äußeren Scheibe 1, wodurch die Verbindung zwischen der Karosserie und der Verglasung vollständig gelöst wird. Hierdurch wird eine einfache Öffnung im Notfall erreicht.

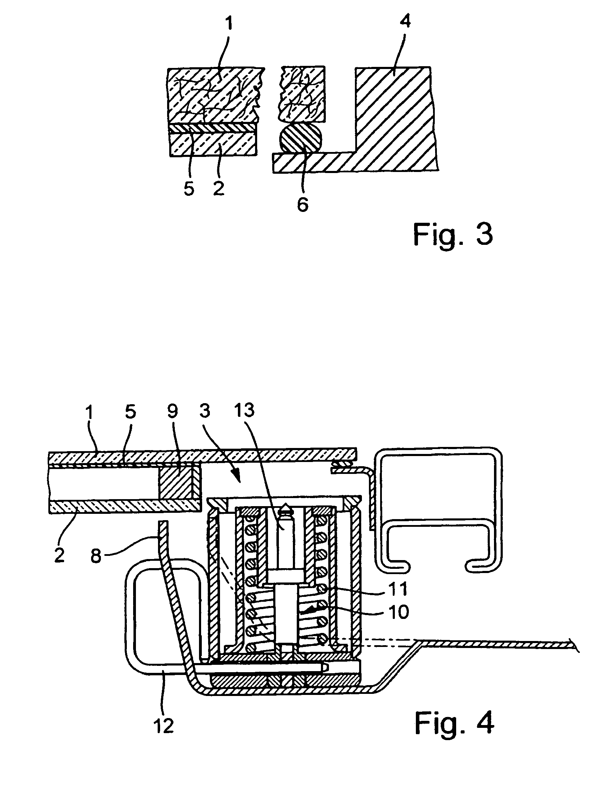

Figur 3 zeigt die Verglasung in einer Schnittdarstellung mit zerstörter Außenscheibe 1. Die zerstörte Außenscheibe 1 stellt nun keine Verbindung mehr mit der Karosserie her. Die Verglasung kann nun einfach entfernt werden. Nach Entfernen der Verglasung erhält man einen Notausstieg, der barrierefrei und daher sicher nutzbar ist.

Figur 4 zeigt eine Schnittdarstellung einer Verglasung mit zueinander beabstandeten Scheiben, wobei eine Schlagbolzenvorrichtung die Funktion des Nothammers 7 übernimmt. Auf die äußere Scheibe 1 ist die Folie 5 aufgeklebt. Über Abstandshalter 9 sind die äußere 1 und die innere Scheibe 2 miteinander verbunden. Der hierdurch entstehende Zwischenraum ist mit Luft gefüllt. Hierdurch wird sowohl die thermische als auch die akustische Isolation der Verglasung verbessert. Die Schlagbolzenvorrichtung 10 befindet sich im Bereich der Aussparung 3 und weist eine Feder 11, einen Sicherungsstift 12 und einen Schlagbolzen 13 auf. Die Feder 11 ist vorgespannt und wird durch den Sicherungsstift 12 gehalten. Im Notfall wird der Sicherungsstift 12 entfernt, wodurch die Feder 11 freigegeben wird und den Schlagbolzen 13 in Richtung der äußeren Scheibe 1 beschleunigt, so dass dieser die äußere Scheibe 1 im Bereich der Aussparung 3 anschlägt und zerstört. Dadurch wird eine bequeme und sichere Notausstiegsfunktion erreicht, die unabhängig von dem manuell zu bedienenden Nothammer 7 ist und wobei nur eine einzige Scheibe zerstört werden muss.
Ein Stützelement 8 ist Teil einer Innenverkleidung und reicht bis über den Rand der inneren Scheibe 2. Sobald der Schlagbolzen 13 die äußere Scheibe beschädigt und die Verglasung in dem Notausstieg nicht mehr gehalten wird, verhindert das Stützelement 8, dass die Verglasung in den Innenraum der Karosserie gelangt. Dies hat den Vorteil, dass Fahrzeuginsassen nicht durch ein Herabfallen der Verglasung verletzt werden können.

## Patentansprüche

1. Verglasung, die über eine Klebeverbindung (6) mit einer Karosserie (4) eines Kraftfahrzeuges verbunden ist und eine äußere (1) aus Einscheibensicherheitsglas (ESG) und eine innere Scheibe (2) aufweist, wobei die äußere Scheibe (1) mit der Karosserie (4) verklebt ist, die äußere (1) und die innere Scheibe (2) miteinander verbunden sind und die innere Scheibe (2) ein Aussparung (3) aufweist,
**dadurch gekennzeichnet,**
**dass** die Aussparung im Eckbereich angeordnet ist und diesen umfasst, und eine Folie (5) als Splitterschutz auf die äußere Scheibe (1) aufgeklebt ist, mindestens die Fläche der inneren Scheibe (2) abdeckt und ebenfalls eine Aussparung (3) im Eckbereich aufweist und diesen umfasst, wobei die Folie (5) als Lichtlenkungsmittel und/oder Sonnenschutz ausgeführt ist.

2. Verglasung nach Anspruch 1,
**dadurch gekennzeichnet,**
**dass** die Folie (5) als Wärme-, Akustik- und/oder Einbruchsschutz ausgebildet ist.

3. Verglasung nach Anspruch 1 oder 2,
**dadurch gekennzeichnet,**
**dass** die äußere Scheibe (1) größere Abmessungen als die innere Scheibe (2) aufweist.

4. Verglasung nach einem der vorhergehenden Ansprüche,
**dadurch gekennzeichnet,**
**dass** die äußere (1) und die innere Scheibe (2) über Abstandshalter (9) voneinander beabstandet sind.

5. Verglasung nach einem der vorhergehenden Ansprüche,
**dadurch gekennzeichnet,**
**dass** die äußere (1) und die innere Scheibe (2) vollflächig miteinander verbunden, vorzugsweise verklebt, sind.

6. Verglasung nach einem der vorhergehenden Ansprüche,
**dadurch gekennzeichnet,**
**dass** die innere Scheibe (2) aus Kunststoff besteht und/oder als Verkleidungsteil ausgeführt ist.

7. Verglasung nach einem der vorhergehenden Ansprüche,
**dadurch gekennzeichnet,**
**dass** im Bereich der Aussparung (3) eine Schlagbolzenvorrichtung (10) vorgesehen ist.

8. Verglasung nach einem der vorhergehenden Ansprüche,
**dadurch gekennzeichnet,**
**dass** ein Bereich der äußeren Scheibe (1) blickdicht ausgeführt, insbesondere bedruckt, ist.

9. Notausstieg für ein Kfz,
**dadurch gekennzeichnet,**
**dass** eine Öffnung in der Karosserie (4) des Kfz durch eine Verglasung nach einem der vorhergehenden Ansprüche verschlossen ist.

10. Notausstieg für ein Kfz nach Anspruch 9,
**dadurch gekennzeichnet,**
**dass** im Innenraum der Fahrgastzelle des Kfz ein Stützelement (8) angeordnet ist, das zum Auffangen der inneren Scheibe (2) ausgebildet ist.

11. Notausstieg für ein Kfz nach Anspruch 10,
**dadurch gekennzeichnet,**
**dass** eine Innenverkleidung der Karosserie als Stützelement (8) ausgebildet ist.

## Claims

1. Glass pane which is connected to a motor vehicle body (4) via an adhesive connection (6) and has an outer pane (1) of toughened safety glass (TSG) and an inner pane (2), the outer pane (1) being adhesively bonded to the body (4), the outer pane (1) and the inner pane (2) being connected to each other and the inner pane (2) having a cutout (3), **characterized in that** the cutout is arranged in the corner region and comprises the latter, and a film (5) is adhesively bonded to the outer pane (1) as shattering protection, covers at least the surface of the inner pane (2) and likewise has a cutout (3) in the corner region and comprises the latter, the film (5) being designed as a light directing means and/or a sunshade.

2. Glass pane according to Claim 1, **characterized in that** the film (5) is designed as protection against heat, acoustics and/or intrusion.

3. Glass pane according to Claim 1 or 2, **characterized in that** the outer pane (1) has larger dimensions than the inner pane (2).

4. Glass pane according to one of the preceding claims, **characterized in that** the outer pane (1) and the inner pane (2) are spaced apart from each other via spacers (9).

5. Glass pane according to one of the preceding claims, **characterized in that** the outer pane (1) and the inner pane (2) are connected to each other, preferably adhesively bonded, over their full surface area.

6. Glass pane according to one of the preceding claims, **characterized in that** the inner pane (2) is composed of plastic and/or is designed as a panelling part.

7. Glass pane according to one of the preceding claims, **characterized in that** a firing pin device (10) is provided in the region of the cutout (3).

8. Glass pane according to one of the preceding claims, **characterized in that** a region of the outer pane (1) is opaque through design, in particular is printed.

9. Emergency exit for a motor vehicle, **characterized in that** an opening in the motor vehicle body (4) is closed by a glass pane according to one of the preceding claims.

10. Emergency exit for a motor vehicle according to Claim 9, **characterized in that** a supporting element (8) which is designed for catching the inner pane (2) is arranged in the interior of the passenger cell.

11. Emergency exit for a motor vehicle according to Claim 10, **characterized in that** an inner panelling of the body is designed as supporting element (8).

## Revendications

1. Vitrage qui est assemblé à une carrosserie (4) d'un véhicule automobile, par un assemblage collé (6), et qui présente une vitre extérieure (1) en verre de sécurité trempé (ESG) et une vitre intérieure (2), la vitre extérieure (1) étant collée à la carrosserie (4), la vitre extérieure (1) et la vitre intérieure (2) étant montées ensemble, et la vitre intérieure (2) présentant un dégagement (3), **caractérisé en ce que** le dégagement est disposé dans la zone angulaire et englobe celle-ci, et une feuille (5) servant de protection contre les éclats est collée sur la vitre extérieure (1), recouvre au moins la surface de la vitre intérieure (2) et présente également un dégagement (3) dans la zone angulaire et englobe celle-ci, où la feuille (5) est réalisée comme un moyen de renvoi de la lumière et/ou comme une protection contre le soleil.

2. Vitrage selon la revendication 1, **caractérisé en ce que** la feuille (5) est conçue comme une protection contre la chaleur, comme une protection acoustique et/ou comme une protection anti-effraction.

3. Vitrage selon la revendication 1 ou 2, **caractérisé en ce que** la vitre extérieure (1) présente des dimensions plus grandes que la vitre intérieure (2).

4. Vitrage selon l'une quelconque des revendications précédentes, **caractérisé en ce que** la vitre extérieure (1) et la vitre intérieure (2) sont espacées l'une de l'autre par des entretoises (9).

5. Vitrage selon l'une quelconque des revendications précédentes, **caractérisé en ce que** la vitre extérieure (1) et la vitre intérieure (2) sont montées ensemble, de préférence collées, sur toute la surface.

6. Vitrage selon l'une quelconque des revendications précédentes, **caractérisé en ce que** la vitre intérieure (2) est en matière plastique et/ou réalisée comme panneau de garniture.

7. Vitrage selon l'une quelconque des revendications précédentes, **caractérisé en ce qu'**il est prévu, dans la zone de dégagement (3), un dispositif à percussion (10).

8. Vitrage selon l'une quelconque des revendications précédentes, **caractérisé en ce qu'**une zone de la vitre extérieure (1) est réalisée en étant bouchée à la vue, en particulier imprimée.

9. Issue de secours pour un véhicule automobile, **caractérisée en ce qu'**une ouverture dans la carrosserie (4) du véhicule automobile est obturée par un vitrage selon l'une quelconque des revendications précédentes.

10. Issue de secours pour un véhicule automobile selon la revendication 9, **caractérisée en ce que**, à l'intérieur de l'habitacle du véhicule automobile, est disposé un élément d'appui (8) qui est conçu pour se saisir de la vitre intérieure (2).

11. Issue de secours pour un véhicule automobile selon la revendication 10, **caractérisée en ce qu'**une garniture intérieure de la carrosserie est conçue comme un élément d'appui (8).
